# EUROPÄISCHE PATENTSCHRIFT

(11) **EP 3 510 361 B1**
(45) Veröffentlichungstag und Bekanntmachung des Hinweises auf die Patenterteilung: **27.01.2021**
(21) Anmeldenummer: 17752134.1
(22) Anmeldetag: 16.08.2017
(51) Int. Cl.: G01D 5/20

(54) **DREHWINKELSENSOR UND STATORELEMENT FÜR DIESEN**
ROTARY SENSOR AND STATOR ELEMENT FOR SAME
CAPTEUR DE POSITION ANGULAIRE ET ÉLÉMENT STATORIQUE POUR CELUI-CI

(30) Priorität: 09.09.2016 DE 102016217255
(43) Veröffentlichungstag der Anmeldung: 17.07.2019
(73) Patentinhaber: Robert Bosch GmbH, 70442 Stuttgart (DE)
(72) Erfinder: UTERMOEHLEN, Fabian, 71229 Leonberg (DE); LEIDICH, Stefan, 71277 Rutesheim (DE); KIESER, Ralf, 74379 Ingersheim (DE)
(86) Internationale Anmeldenummer: PCT/EP2017/070710
(87) Internationale Veröffentlichungsnummer: WO 2018/046256

(56) Entgegenhaltungen:
- EP-A2- 0 909 955
- DE-A1- 10 026 019
- DE-A1- 19 920 190
- DE-A1-102013 222 024
- DE-T2- 60 038 420

## Beschreibung

### Stand der Technik

Die Erfindung betrifft einen Drehwinkelsensor und ein Statorelement für diesen.

Durch Anordnen von Sende- und Empfangsspulen am Stator eines Drehwinkelsensors, die mit einem Target am Rotor induktiv derart gekoppelt sind, dass bei Aussenden eines elektromagnetischen Wechselfeldes durch die Sendespule in mindestens zwei Empfangsspulen mindestens zwei voneinander verschiedene Wechselspannungen induziert werden, kann der Drehwinkel abhängig von den induzierten Wechselspannungen erfasst werden.

Dies ist beispielsweise in der EP 0 909 955 B1 beschrieben.

Aus der DE 10 2013 222 024 A1 ist ein induktiver Positionssensor mit Feldformenden Elementen bekannt.

Aus der DE 100 26 019 A1 ist ein induktiver Positionssensor, insbesondere für ein Kraftfahrzeug, bekannt.

Aus der DE 600 38 420 T2 ist ein Drehwinkelsensor mit induktiver Kopplung bekannt.

Aus der DE 199 20 190 A1 sind ein Linearsensor und ein induktiver Winkelsensor bekannt.

### Offenbarung der Erfindung

Bei realen Sensoren können Messfehler auftreten, die durch Störungen von außen verursacht werden. Derartige Störungen können z.B. Störsignale sein, die das elektromagnetische Wechselfeld in der Empfangsspule beeinflussen. Andere Störungen können durch Einbautoleranzen auftreten, z.B. durch ein Verkippen des Targets gegenüber einer Drehachse des Drehwinkelsensors. Wird ein derartiger Sensor einem externen elektromagnetischen Wechselfeld als Störsignal mit einer Frequenz ähnlich der Arbeitsfrequenz, insbesondere im Bereich von +/- 100 kHz um seine Arbeitsfrequenz ausgesetzt, überlagern sich diese Wechselfelder. Eine durch das Überlagern des Wechselfelds in der Empfangsspule induzierte Spannung kann dann unter Umständen nicht von einer ohne Störsignal induzierten Spannung unterschieden werden. Dadurch kann z.B. die Messgenauigkeit beeinträchtigt werden.

Es kann daher ein Bedarf bestehen, einen Drehwinkelsensor bereitzustellen, der robust ist gegen derartige Messfehler.

### Vorteile

Es ist daher Aufgabe der vorliegenden Erfindung, einen verbesserten Drehwinkelsensor bereitzustellen.

Diese Aufgabe wird durch den Drehwinkelsensor nach Anspruch 1 gelöst.

Weitere vorteilhafte Ausgestaltungen der vorliegenden Erfindung sind in den abhängigen Ansprüchen angegeben.

Ein entsprechender Drehwinkelsensor umfasst ein Statorelement, ein bezüglich des Statorelements um eine Drehachse drehbar gelagertes Rotorelement und eine Messeinrichtung. Der Drehwinkel ist durch eine induktive Kopplung zwischen dem Rotorelement und dem Statorelement erfassbar.

Die Messeinrichtung ist ausgebildet, den Drehwinkel abhängig von der induktiven Kopplung zwischen dem Rotorelement und dem Statorelement zu erfassen. Das Statorelement weist mindestens eine Sendespule zur Aussendung elektromagnetischer Wechselfelder und mindestens zwei Empfangsspulen zum Erfassen elektromagnetischer Wechselfelder auf. Die Messeinrichtung ist ausgebildet, die mindestens eine Sendespule mit wenigstens zwei voneinander verschiedenen Frequenzen zur Aussendung von wenigstens zwei elektromagnetischen Wechselfeldern anzuregen. Die Messeinrichtung ist ausgebildet, wenigstens zwei durch Aussendung der wenigstens zwei elektromagnetischen Wechselfelder in mindestens einer der mindestens zwei Empfangsspulen induzierte Wechselspannungen zur Erfassung wenigstens zweier induktiver Kopplungen mittels jeweiliger Frequenzen der wenigstens zwei elektromagnetischen Wechselfelder zu demodulieren.

Das Rotorelement kann mindestens einen elektrisch leitenden Abschnitt aufweisen. Ein solcher elektrisch leitender Abschnitt kann z.B. mit der jeweiligen Empfangsspule induktiv derart gekoppelt sein, dass bei Aussenden des mindestens einen elektromagnetischen Wechselfeldes durch die mindestens eine Sendespule in der jeweiligen Empfangsspule mindestens eine Wechselspannung induziert wird.

Der mindestens eine elektrisch leitende Abschnitt kann z.B. am Rotorelement derart angeordnet sein, dass die in der jeweiligen Empfangsspule induzierte mindestens eine Wechselspannung, insbesondere überwiegend, von einem Drehwinkel zwischen dem Statorelement und dem Rotorelement abhängig ist.

Die mindestens eine Winkelerfassungs-Sendespule wird beispielsweise mit einer Wechselspannung beaufschlagt, die Amplituden im Bereich 0.5 V bis 10 V, bevorzugt 1.5 V, bei Frequenzen im Bereich einiger MHz, bevorzugt zwischen 4 MHz und 6 MHz, aufweist.

Vorteilhafterweise umfasst die Messeinrichtung einen Frequenzerzeuger, insbesondere einen digitalen Frequenzerzeuger, der ausgebildet ist, zur Aussendung von elektromagnetischen Wechselfeldern unterschiedlicher Frequenz durch die mindestens eine Sendespule, eine Vielzahl, insbesondere sich stetig ändernde, Frequenzen vorzugeben. Die Messeinrichtung umfasst einen Demodulator, der ausgebildet ist, die mittels der elektromagnetischen Wechselfelder unterschiedlicher Frequenz induzierten Wechselspannungen mittels der jeweils vorgegebenen Frequenz zu demodulieren.

Vielzahl bedeutet in diesem Zusammenhang wenigstens zwei Frequenzen, vorzugsweise wenigstens drei Frequenzen, die durch den Frequenzerzeuger vorgebbar sind.

Frequenzerzeuger, insbesondere digitale Frequenzerzeuger, ermöglichen es in besonders einfach handhabbarer Weise eine Vielzahl unterschiedlicher Frequenzen vorzugeben. Beispielsweise werden Frequenzen in einem Frequenzband von einigen kHz, beispielsweise in einem Frequenzband der Breite 500 kHz oder 400 kHz, im Bereich der Frequenzen von 4 MHz bis 6 MHz vorgegeben. Nach der Vorgabe der Frequenz erfolgt die Aussendung des elektromagnetischen Wechselfeldes mit dieser Frequenz. Währenddessen wird die induktive Kopplung anhand der in der mindestens einen der mindestens zwei Empfangsspulen induzierten Wechselspannung erfasst. Anschließend erfolgt eine Wiederholung dieser Schritte. Die Frequenzänderung kann gemäß einer auf- oder absteigenden Rampe oder einer auf- oder absteigenden Treppe vorgegeben werden. Sie kann alternativ auch zufällig erfolgen.

Stetig in diesem Zusammenhang bedeutet, dass zwischen zwei vorgegebenen Frequenzen keine Sprünge oder nur kleine Sprünge liegen. Beispielsweise werden Frequenzen im Abstand von 50 kHz vorgegeben. So werden Signalsprünge und damit Einschwingvorgängen vermieden, die die Messung ungenau machen könnten.

Vorzugsweise weist das Statorelement eine erste Sendespule, eine zweite Sendespule, und wenigstens zwei Empfangsspulen auf. Die erste Sendespule sendet ein erstes elektromagnetisches Wechselfeld aus. Die zweite Sendespule sendet ein zweites elektromagnetisches Wechselfeld aus, dessen Frequenz sich von dem ersten elektromagnetischen Wechselfeld unterscheidet, insbesondere um wenigstens 5%.

Durch zwei Sendespulen, die zwei unterschiedliche elektromagnetische Wechselfelder aussenden, können elektromagnetische Wechselfelder mit zwei verschiedenen Frequenzen zur Messung des Drehwinkels verwendet werden. Ein Störsignals mit einer Frequenz, die der Frequenz eines der elektromagnetischen Wechselfelder nahe kommt kann somit nur auf eines der elektromagnetischen Wechselfelder einen die Messung störenden Einfluss haben. Werden mehr als zwei Frequenzen vorgegeben, kann eine fehlerhafte Spannung anhand einer Abweichung von den beiden anderen Spannungen erkannt werden. Dies reduziert die Störanfälligkeit des Drehwinkelsensors bezüglich eines Störsignals mit einer Frequenz die der Frequenz eines der elektromagnetischen Wechselfelder nahe kommt.

Vorzugsweise umfasst die Messeinrichtung einen ersten Resonanzschwingkreis, der ausgebildet ist, das erste elektromagnetische Wechselfeld zu einem ersten Zeitpunkt mit einer ersten Frequenz zu erzeugen. Die Messeinrichtung umfasst einen zweiten Resonanzschwingkreis, der ausgebildet ist, das zweite elektromagnetische Wechselfeld zu einem vom ersten Zeitpunkt verschiedenen zweiten Zeitpunkt mit einer zweiten Frequenz zu erzeugen.

Durch Resonanzschwingkreise wird die Erzeugung der elektromagnetischen Wechselfelder einfach realisierbar. Für unveränderlich vorgegebene Frequenzen stellt dies eine kostengünstige, platzsparende Alternative zu aufwendigeren Schaltungen dar.

Vorteilhafterweise umfasst der Drehwinkelsensor einen Demodulator, der ausgebildet ist, die in der jeweiligen Empfangsspule erzeugte erste induzierte Wechselspannung mittels der ersten Frequenz zu demodulieren und die in der jeweiligen Empfangsspule erzeugte zweite induzierte Wechselspannung mittels der zweiten Frequenz zu demodulieren. Für unveränderlich vorgegebene Frequenzen stellt dies eine kostengünstige, platzsparende Alternative zu aufwendigeren Schaltungen dar.

Vorteilhafterweise weist das Statorelement mindestens zwei erste Empfangsspulen und mindestens zwei zweite Empfangsspulen auf. Die mindestens zwei ersten Empfangsspulen sind zur Erfassung einer ersten induzierten Wechselspannung mit der ersten Frequenz des ersten elektromagnetischen Wechselfeldes ausgebildet, die mindestens zwei zweiten Empfangsspulen sind zur Erfassung einer zweiten induzierten Wechselspannung mit der zweiten Frequenz des zweiten elektromagnetischen Wechselfeldes ausgebildet. Ausgebildet bedeutet in diesem Zusammenhang, dass die jeweilige Spule für die jeweilige Empfangsfrequenz optimiert ist. Reale Spulen besitzen neben der eigentlichen gewünschten Induktivität auch noch andere, im Regelfall unerwünschte elektrische Eigenschaften wie einen elektrischen Widerstand, parasitäre Kapazitäten und damit einen Schwingkreis mit mindestens einer elektrischen Resonanzstelle (Eigenresonanz). Beispielsweise weist eine geeignete Spule eine Eigenresonanz von wenigstens der vierfachen Empfangsfrequenz auf. Dies vermeidet unerwünschte Effekte durch die Eigenresonanz.

Vorteilhafterweise umfasst die Messeinrichtung einen ersten Resonanzschwingkreis, der ausgebildet ist, das erste elektromagnetische Wechselfeld zu einem ersten Zeitpunkt, mit einer ersten Frequenz zu erzeugen, und wobei die Messeinrichtung einen zweiten Resonanzschwingkreis umfasst, der ausgebildet ist, das zweite elektromagnetische Wechselfeld zu einem vom ersten Zeitpunkt verschiedenen zweiten Zeitpunkt, mit einer zweiten Frequenz zu erzeugen.

Durch Resonanzschwingkreise wird die Erzeugung der elektromagnetischen Wechselfelder einfach realisierbar. Für unveränderlich vorgegebene Frequenzen stellt dies eine kostengünstige, platzsparende Alternative zu aufwendigeren Schaltungen dar.

Vorteilhafterweise umfasst die Messeinrichtung einen Demodulator, der ausgebildet ist, die erste induzierte Wechselspannung mittels der ersten Frequenz zu demodulieren, und die zweite induzierte Wechselspannung mittels der zweiten Frequenz zu demodulieren. Für unveränderlich vorgegebene Frequenzen stellt dies eine kostengünstige, platzsparende Alternative zu aufwendigeren Schaltungen dar.

Vorteilhafterweise ist der Demodulator ausgebildet, die erste induzierte Wechselspannung als Eingangssignal von mindestens einer der mindestens zwei ersten Empfangsspulen mit der ersten Frequenz und die zweite induzierte Wechselspannung als Eingangssignal von mindestens einer der mindestens zwei zweiten Empfangsspulen mit der zweiten Frequenz zu demodulieren.

Dadurch sind die Signalpfade für die Messung getrennt. Ein derartiges redundantes System kann auch zur Überwachung oder Erkennung von Fehlerfällen im Sensor eingesetzt werden.

Vorteilhafterweise umfasst der Drehwinkelsensor mindestens einen Resonanzschwingkreis zur Erzeugung einer jeweiligen Frequenz, wobei der mindestens eine Resonanzschwingkreis die mindestens eine Sendespule insbesondere als Teil mindestens eines LC- Schwingkreises umfasst. Dies stellt eine platzsparende Alternative zu aufwendigeren Schaltungen dar.

Vorteilhafterweise umfasst der Resonanzschwingkreis mindestens einen Varaktor, der zur mindestens einen Sendespule parallel geschaltet ist, wobei eine jeweilige Frequenz durch den Varaktor abstimmbar ist. Der Varaktor ist ein elektronisches Halbleiter-Bauteil. Durch Änderung einer an den Varaktor angelegten Spannung lässt sich eine Variation der Kapazität des Varaktors erreichen.

Dadurch steht eine elektrisch steuerbare Kapazität zur Verfügung, mit der der Resonanzschwingkreis durch elektrische Steuerung einfach abstimmbar ist.

Vorteilhafterweise sind eine Vielzahl an Frequenzen insbesondere im Bereich von 4 MHz bis 6 MHz vorgebbar.

Die Erfindung betrifft auch eine Statorelement der beschriebenen Art für einen Drehwinkelsensor.

### Kurzbeschreibung der Zeichnungen

Bevorzugte Ausführungsformen der vorliegenden Erfindung werden nachfolgend anhand der beigefügten Zeichnungen näher erläutert. Es zeigen:
Fig. 1 schematisch eine Ansicht eines Teils eines Drehwinkelsensors nach einer ersten Ausführungsform in einer Seitenansicht,
Fig. 2 schematisch eine Ansicht eines Teils des Drehwinkelsensors nach der ersten Ausführungsform in einer Aufsicht,
Fig. 3 schematisch eine Ansicht eines Teils des Drehwinkelsensors und einen Teil einer Messeinrichtung nach der ersten Ausführungsform,
Fig. 4 schematisch eine Ansicht eines Teils eines Drehwinkelsensors nach einer zweiten Ausführungsform in einer Seitenansicht,
Fig. 5 schematisch eine Ansicht eines Teils des Drehwinkelsensors und einen Teil einer Messeinrichtung nach der zweiten Ausführungsform,
Fig. 6 schematisch eine Ansicht eines Teils eines Drehwinkelsensors nach einer dritten Ausführungsform in einer Seitenansicht,
Fig. 7 schematisch eine Ansicht eines Teils des Drehwinkelsensors und einen Teil einer Messeinrichtung nach der dritten Ausführungsform,
Fig. 8 schematisch eine Ansicht eines Teils eines Resonanzschwingkreises.

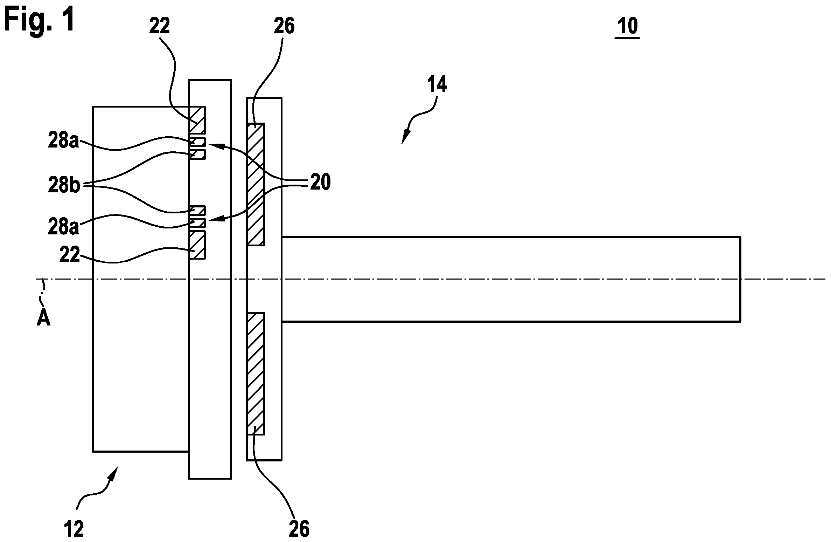

Fig. 1 zeigt schematisch eine Ansicht eines Teils eines Drehwinkelsensors 10 nach einer ersten Ausführungsform in einer Seitenansicht. Der Drehwinkelsensor 10 umfasst ein Statorelement 12, und ein bezüglich des Statorelements 12 um eine Drehachse A drehbar gelagertes Rotorelement 14.

Der Drehwinkel ist durch eine induktive Kopplung zwischen dem Rotorelement 14 und dem Statorelement 12 erfassbar. Details zur induktiven Kopplung und deren Verwendung zur Bestimmung des Drehwinkels sind beispielsweise in der EP 0 909 955 B1 beschrieben.

Dementsprechend weist das Statorelement 12 beispielsweise die in Fig. 1 dargestellte mindestens eine Sendespule 22 zur Aussendung eines elektromagnetischen Wechselfeldes und mindestens zwei Empfangsspulen 28a, 28b zum Erfassen elektromagnetischer Wechselfelder auf. Die zwei Empfangsspulen 28a, 28b sind im Beispiel in einer Ebene senkrecht zur Drehachse A, in radialer Richtung bezüglich der Drehachse A beispielsweise in derselben Ebene der Leiterplatte angeordnet. Die Sendespule 22 ist in radialer Richtung bezüglich der Drehachse A gesehen außerhalb der jeweiligen Empfangsspulen 28a, 28b angeordnet

"Radial" oder "radiale Anordnung" bedeutet im Folgenden eine speichenförmige von der Drehachse A ausgehende Richtung oder Anordnung. "Umlaufend" oder "umlaufende Richtung" bedeutet im Folgenden eine kreisförmige Richtung im Wesentlichen in einer Ebene senkrecht zur Drehachse A. "Axiale Richtung" bedeutet im Folgenden eine Richtung entlang der Drehachse A.

Eine Sensor-Leiterplatte für den Drehwinkelsensor 10 umfasst beispielsweise mindestens eine umlaufend angeordnete Sendespule 22, die eine oder mehrere Wicklungen aufweist und vorzugsweise als Planarspule ausgeführt ist. Die Wicklungen können vorteilhaft in mehreren Ebenen einer mehrlagigen Leiterplatte realisiert sein, um ein ausreichend großes elektromagnetisches Wechselfeld und eine ausreichend große Induktivität erzeugen zu können. Die mindestens eine Sendespule 22 wird mit einer Wechselspannung beaufschlagt, die Amplituden im Bereich 0.5 V bis 10 V, bevorzugt 1.5 V, bei Frequenzen im Bereich einiger MHz aufweist.

Das Rotorelement 14 weist mindestens einen elektrisch leitenden Abschnitt 26 auf. Der mindestens eine elektrisch leitende Abschnitt 26 ist mit den mindestens zwei Empfangsspulen 28a, 28b induktiv derart gekoppelt, dass bei Aussenden des elektromagnetischen Wechselfeldes durch die mindestens eine Sendespule 22 in den mindestens zwei Empfangsspulen 28a, 28b mindestens zwei Wechselspannungen induziert werden.

Der mindestens eine elektrisch leitende Abschnitt 26 ist am Rotorelement 14 derart angeordnet, dass die in den mindestens zwei Empfangsspulen 28a, 28b induzierten zwei ersten Wechselspannungen, insbesondere überwiegend, von einem Drehwinkel zwischen dem Statorelement 12 und dem Rotorelement 14 abhängig ist.

Einzelheiten zur Anordnung der mindestens einen Sendespule 22, der mindestens zwei Empfangsspulen 28a, 28b, und des mindestens einen elektrisch leitenden Abschnitt 26 sowie Einzelheiten zur Bestimmung des Drehwinkels sind beispielsweise aus der EP 0 909 955 B1 bekannt.

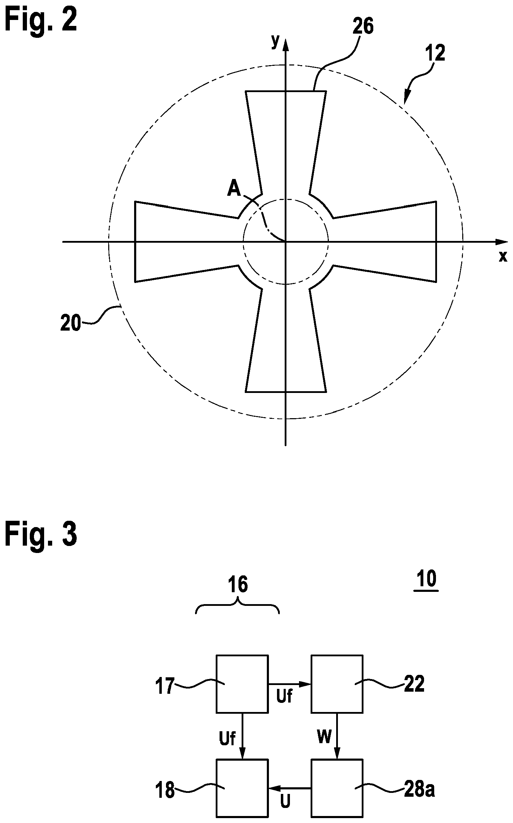

Fig. 2 zeigt schematisch eine Ansicht eines Teils des Drehwinkelsensors nach der ersten Ausführungsform in einer Aufsicht.

Eine Spulenandordnung 20 umfassend die mindestens zwei Empfangsspulen 28a, 28b und die mindestens eine Sendespule 22 ist in Fig. 2 schematisch als Kreisring dargestellt. Im Beispiel von Fig. 2 ist ein elektrisch leitender Abschnitt 26 vorgesehen, der in einer Ebene senkrecht zur Drehachse A im Wesentlichen die Form der äußeren Umrandung eines Malteserkreuzes hat, und dessen Mittelpunkt auf der Drehachse A liegt. Vorzugsweise ist der elektrisch leitende Abschnitt 26 ein elektrisch leitfähiges Blechteilstanzteil. Bei der beschriebenen Form handelt es sich um ein Beispiel, auch andere Formen als die beschriebene Kreuzform sind möglich.

Der elektrisch leitende Abschnitt 26 kann nur entlang der äußeren Umrandung der Form angeordnet sein, oder die Fläche der durch die äußere Umrandung vorgegebenen Form teilweise oder vollständig ausfüllen.

Fig. 3 zeigt schematisch eine Ansicht eines Teils des Drehwinkelsensors 10 und einen Teil einer Messeinrichtung 16 nach der ersten Ausführungsform. In Fig. 3 ist als Beispiel eine erste Empfangsspule 28a der mindestens zwei Empfangsspulen 28a, 28b dargestellt. Für eine zweite Empfangsspule 28b oder jede weitere Empfangsspule der mindestens zwei Empfangsspulen 28a, 28b kann eine entsprechende Anordnung vorgesehen sein.

Die Messeinrichtung 16 ist ausgebildet, den Drehwinkel abhängig von der induktiven Kopplung zwischen dem Rotorelement 14 und dem Statorelement 12 zu erfassen. Die Messeinrichtung 16 ist ausgebildet, die Sendespule 22 mit wenigstens zwei voneinander verschiedenen Frequenzen zur Aussendung von wenigstens zwei elektromagnetischen Wechselfeldern anzuregen. Zudem ist die Messeinrichtung 16 ausgebildet, wenigstens zwei durch Aussendung der wenigstens zwei elektromagnetischen Wechselfelder in mindestens einer der mindestens zwei Empfangsspulen 28a, 28b induzierte Wechselspannungen zur Erfassung wenigstens zweier induktiver Kopplungen mittels jeweiliger Frequenzen der wenigstens zwei elektromagnetischen Wechselfelder zu demodulieren. D. h. eine induzierte Wechselspannung U wird mittels der Frequenz demoduliert mit der das elektromagnetische Wechselfeld W angeregt wird, das die Spannung induziert.

Die Messeinrichtung 16 umfasst einen Frequenzerzeuger 17, insbesondere einen digitalen Frequenzerzeuger 17, der ausgebildet ist, eine Vielzahl, insbesondere sich stetig ändernde, Frequenzen f vorzugeben. Durch eine vom Frequenzerzeuger 17 mit der Frequenz f ausgegebene Wechselspannung Uf wird die Sendespule 22 zur Aussendung von elektromagnetischen Wechselfeldern W unterschiedlicher Frequenz f angeregt.

Die Messeinrichtung 16 umfasst zudem einen Demodulator 18, der ausgebildet ist, die mittels der elektromagnetischen Wechselfelder W unterschiedlicher Frequenz f induzierten Wechselspannungen U mittels der jeweils vorgegebenen Frequenz f zu demodulieren.

Am Eingang eines Demodulators 18 liegt sowohl die induzierte Wechselspannung U als auch die Wechselspannung Uf an. Es kann vorgesehen sein, dass die induzierte Wechselspannung U vor oder im Demodulator 18 durch einen Signalverstärker verstärkt wird. Im Demodulator 18 ist beispielsweise ein Mischer (nicht dargestellt) angeordnet, der die Wechselspannung Uf und die induzierte Wechselspannung U mischt. Als Mischer wird in diesem und den weiteren Ausführungsformen ein in der Kommunikationstechnik zur Frequenzumsetzung von elektrischen Signalen üblicherweise verwendetes Bauelement bezeichnet. Dieses Bauelement kann in bekannter Weise aus elektronischen Bauelementen wie Dioden und Transistoren zusammengesetzt sein. Der Mischer kann bei digitaler Signalverarbeitung auch durch Software in einem Signalprozessor nachbildet sein. Das gemischte Signal wird beispielsweise durch einen Tiefpassfilter einer Signalerfassung, beispielsweise einem Analog/Digital-Wandler zugeführt. Das bedeutet, die Wechselspannung Uf und der induzierten Wechselspannung U werden ins Basisband gemischt. Dadurch wird das Nutzsignal vom Trägersignal getrennt. Das so entstehende Signal im Basisband wird anschließend über den Tiefpassfilter gefiltert und dann erfasst.

Durch die Auswertung der erfassten Signale kann aus Betrag und Phase der induktiven Kopplung der Drehwinkel bestimmt werden. Einzelheiten zur Bestimmung des Drehwinkels sind beispielsweise aus der EP 0 909 955 B1 bekannt.

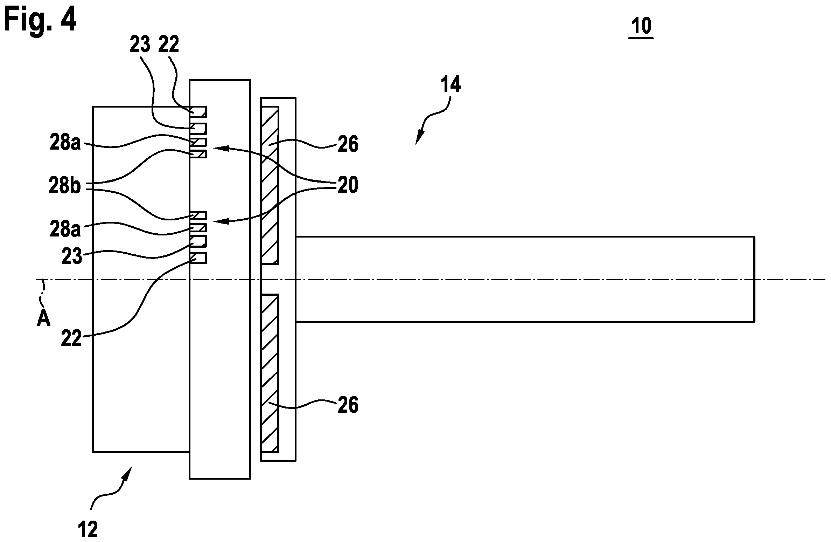

Fig. 4 zeigt schematisch eine Ansicht eines Teils eines Drehwinkelsensors 10 nach einer zweiten Ausführungsform in einer Seitenansicht. Elemente dieser Ausführungsform, die mit den zuvor beschriebenen übereinstimmen sind mit demselben Bezugszeichen bezeichnet.

Der Drehwinkelsensor 10 nach der zweiten Ausführungsform umfasst eine erste Sendespule 22, eine zweite Sendespule 23, und wenigstens zwei Empfangsspulen 28a, 28b. Die erste Sendespule 22, und die zweite Sendespule 23 sind im Beispiel in einer Ebene senkrecht zur Drehachse A, in radialer Richtung bezüglich der Drehachse A beispielsweise in derselben Ebene der Leiterplatte angeordnet. Die Sendespulen 22, 23 sind in radialer Richtung bezüglich der Drehachse A gesehen außerhalb der jeweiligen Empfangsspulen 28a, 28b angeordnet.

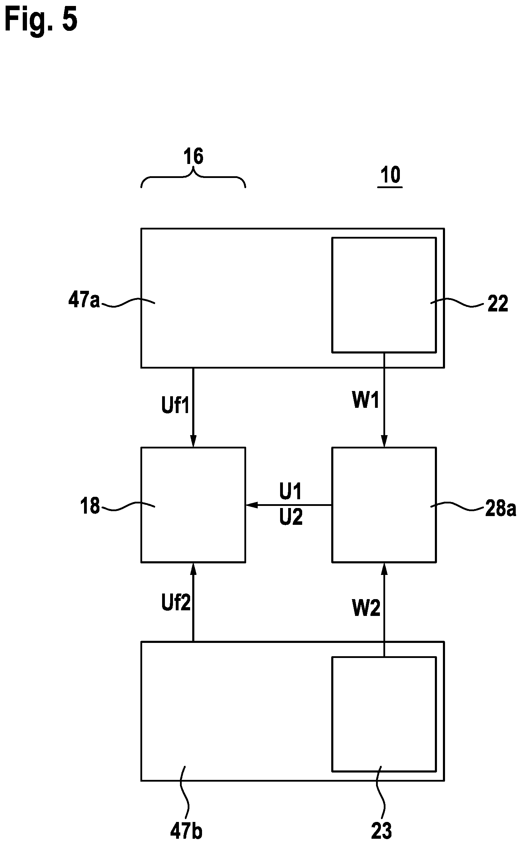

Fig. 5 zeigt schematisch eine Ansicht eines Teils des Drehwinkelsensors 10 und einen Teil einer Messeinrichtung 16 nach der zweiten Ausführungsform. Elemente dieser Ausführungsform, die mit den zuvor beschriebenen übereinstimmen, sind mit demselben Bezugszeichen bezeichnet. In Fig. 5 ist als Beispiel eine erste Empfangsspule 28a der mindestens zwei Empfangsspulen 28a, 28b dargestellt. Für eine zweite Empfangsspule 28b oder jede weitere Empfangsspule der mindestens zwei Empfangsspulen 28a, 28b kann eine entsprechende Anordnung vorgesehen sein.

Die Messeinrichtung 16 umfasst einen ersten Resonanzschwingkreis 47a, der ausgebildet ist, ein erstes elektromagnetisches Wechselfeld W1 zu einem ersten Zeitpunkt mit einer ersten Frequenz f1 zu erzeugen. Die Messeinrichtung 16 umfasst einen zweiten Resonanzschwingkreis 47b, der ausgebildet ist, ein zweites elektromagnetische Wechselfeld W2 zu einem vom ersten Zeitpunkt verschiedenen zweiten Zeitpunkt mit einer zweiten Frequenz f2 zu erzeugen.

Die erste Sendespule 22 wird vom ersten Resonanzschwingkreis 47a mit einer ersten Wechselspannung Uf1 angesteuert und sendet das erste elektromagnetische Wechselfeld W1 aus. Die zweite Sendespule 23 wird vom zweiten Resonanzschwingkreis 47b mit einer zweiten Wechselspannung Uf2 angesteuert und sendet das zweite elektromagnetische Wechselfeld W2 aus.

Die Frequenzen von erstem elektromagnetischen Wechselfeld W1 und zweitem elektromagnetischen Wechselfeld W2 unterscheiden sich, insbesondere um wenigstens 5%.

Der Demodulator 18, ist im Unterschied zur ersten Ausführungsform ausgebildet, die in mindestens einer der mindestens zwei ersten Empfangsspulen 28a, 28b erzeugte erste induzierte Wechselspannung U1 mittels der ersten Frequenz f1 zu demodulieren und die in mindestens einer der mindestens zwei ersten Empfangsspulen 28a, 28b erzeugte zweite induzierte Wechselspannung U2 mittels der zweiten Frequenz f2 zu demodulieren.

Dazu werden beispielsweise der erste Resonanzschwingkreis 47a und der zweite Resonanzschwingkreis 47b ausgangsseitig mit zwei verschiedenen Eingängen eines Mischers (nicht dargestellt) im Demodulator 18 verbunden.

Der Eingang des Mischers für die induzierte Spannung bleibt gegenüber der ersten Ausführungsform unverändert. Der im Demodulator 18 angeordnete Mischer mischt entweder die erste Wechselspannung Uf1 mit der ersten induzierten Wechselspannung U1 oder die zweite Wechselspannung Uf2 mit der zweiten induzierten Wechselspannung U2. Der Demodulator 18 empfängt in demselben Eingang die erste induzierte Wechselspannung U1 oder die zweite induzierte Wechselspannung U2.

Aufgrund eines zeitlichen Versatzes der ausgegebenen Wechselspannungen liegt je nach Zeitpunkt beispielsweise die erste Wechselspannung Uf1 und die erste induzierte Wechselspannung U1 am Mischer an, oder die zweite Wechselspannung Uf2 und die zweite induzierte Wechselspannung U2. Die Messeinrichtung 16 umfasst beispielsweise einen Taktgeber, der ausgebildet ist, die Resonanzschwingkreise 47a, 47b zeitlich versetzt anzusteuern.

Die anderen Schritte der Signalverarbeitung erfolgen wie in der ersten Ausführungsform beschrieben. Dadurch werden die induzierten Spannungen nacheinander auswertbar.

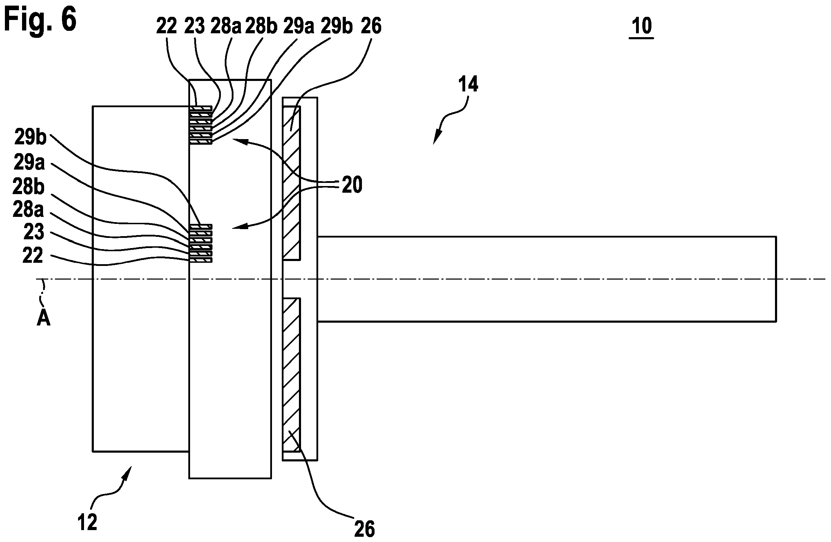

Fig. 6 zeigt schematisch eine Ansicht eines Teils eines Drehwinkelsensors nach einer dritten Ausführungsform in einer Seitenansicht. Elemente dieser Ausführungsform, die mit den zuvor beschriebenen übereinstimmen sind mit demselben Bezugszeichen bezeichnet.

Das Statorelement 12 weist mindestens zwei erste Empfangsspulen 28a, 28b und mindestens zwei zweite Empfangsspulen 29a, 29b auf. Die mindestens zwei ersten Empfangsspulen 28a, 28b sind zur Erfassung einer ersten induzierten Wechselspannung U1 mit der ersten Frequenz f1 des ersten elektromagnetischen Wechselfeldes W1 ausgebildet. Die mindestens zwei zweiten Empfangsspulen 29a, 29b sind zur Erfassung der zweiten induzierten Wechselspannung U2 mit der zweiten Frequenz f2 des zweiten elektromagnetischen Wechselfeldes W2 ausgebildet. Die mindestens zwei ersten Empfangsspulen 28a, 28b und die mindestens zwei zweiten Empfangsspulen 29a, 29b sind im Beispiel in einer Ebene senkrecht zur Drehachse A, in radialer Richtung bezüglich der Drehachse A beispielsweise in derselben Ebene oder unterschiedlichen Ebenen der Leiterplatte angeordnet. Die Sendespulen 22, 23 sind in radialer Richtung bezüglich der Drehachse A gesehen außerhalb der jeweiligen Empfangsspulen 28a, 28b, 29a, 29b angeordnet. Ausgebildet bedeutet in diesem Zusammenhang für alle Ausführungsformen, dass die jeweilige Spule für die jeweilige Empfangsfrequenz optimiert ist. Reale Spulen besitzen neben der eigentlichen gewünschten Induktivität auch noch andere, im Regelfall unerwünschte elektrische Eigenschaften wie einen elektrischen Widerstand, parasitäre Kapazitäten und damit einen Schwingkreis mit mindestens einer elektrischen Resonanzstelle (Eigenresonanz). Beispielsweise weist eine geeignete Spule eine Eigenresonanz von wenigstens der vierfachen Empfangsfrequenz auf. Dies vermeidet unerwünschte Effekte durch die Eigenresonanz.

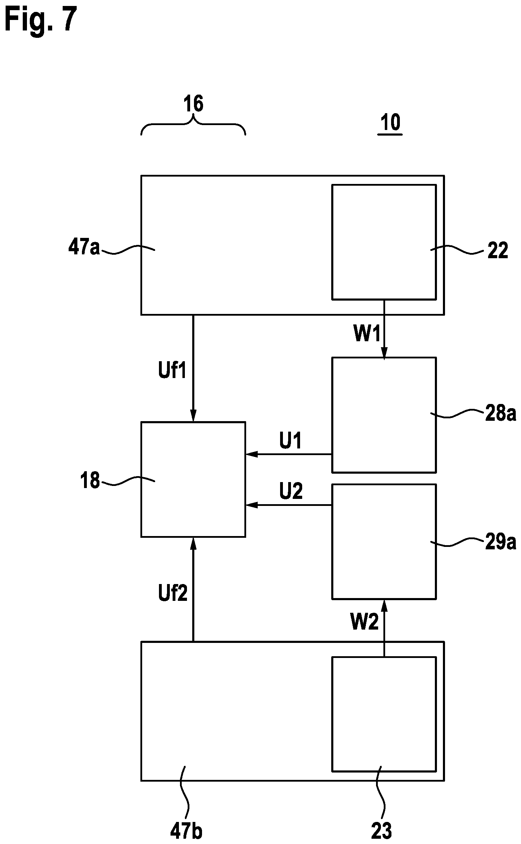

Fig. 7 zeigt schematisch eine Ansicht eines Teils des Drehwinkelsensors und einen Teil einer Messeinrichtung nach der dritten Ausführungsform. Elemente dieser Ausführungsform, die mit den zuvor beschriebenen übereinstimmen sind mit demselben Bezugszeichen bezeichnet. In Fig. 7 ist als Beispiel eine erste Empfangsspule 28a der mindestens zwei ersten Empfangsspulen 28a, 28b dargestellt. Für eine zweite Empfangsspule 28b der mindestens zwei ersten Empfangsspulen 28a, 28b oder jede weitere Empfangsspule der mindestens zwei ersten Empfangsspulen 28a, 28b kann eine entsprechende Anordnung vorgesehen sein. In Fig. 7 ist als Beispiel eine erste Empfangsspule 29a der mindestens zwei zweiten Empfangsspulen 29a, 29b dargestellt. Für eine zweite Empfangsspule 29b der mindestens zwei zweiten Empfangsspulen 29a, 29b oder jede weitere Empfangsspule der mindestens zwei zweiten Empfangsspulen 29a, 29b kann eine entsprechende Anordnung vorgesehen sein.

Die Messeinrichtung 16 umfasst, wie in der zweiten Ausführungsform beschrieben, den ersten Resonanzschwingkreis 47a und den zweiten Resonanzschwingkreis 47b.

Die Messeinrichtung 16 umfasst den Demodulator 18, der im Unterschied zu den zuvor beschriebenen Ausführungsformen mit einem ersten Eingang für die erste induzierte Wechselspannung U1 und einem zweiten Eingang für die zweite induzierte Wechselspannung U2 ausgebildet ist.

Der Demodulator 18 ist ausgebildet, die erste induzierte Wechselspannung U1 mittels der ersten Frequenz f1 zu demodulieren, und die zweite induzierte Wechselspannung U2 mittels der zweiten Frequenz f2 zu demodulieren.

Beispielsweise weist der Demodulator 18 zwei Mischer (nicht dargestellt) auf. Ein erster Mischer verarbeitet wie in der ersten Ausführungsform beschrieben die erste Wechselspannung Uf1 mit der ersten induzierten Wechselspannung U1. Ein zweiter Mischer verarbeitet wie in der ersten Ausführungsform beschrieben die zweite Wechselspannung Uf2 mit der zweiten induzierten Wechselspannung U2.

Die anderen Schritte der Signalverarbeitung erfolgen für jeden der Mischer beispielsweise wie in der ersten Ausführungsform beschrieben.

Das bedeutet, der Demodulator 18 ist ausgebildet, die erste induzierte Wechselspannung U1 als Eingangssignal von mindestens einer der mindestens zwei ersten Empfangsspulen 28a, 28b mit der ersten Frequenz f1 und die zweite induzierte Wechselspannung U2 als Eingangssignal von mindestens einer der mindestens zwei zweiten Empfangsspulen 29a, 29b mit der zweiten Frequenz f2 zu demodulieren.

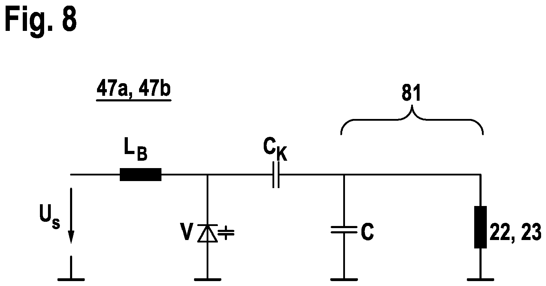

Fig. 8 zeigt schematisch eine Ansicht eines Teils eines beispielhaften Resonanzschwingkreises 47a, 47b. Elemente dieser Ausführungsform, die mit den zuvor beschriebenen übereinstimmen sind mit demselben Bezugszeichen bezeichnet.

Der Resonanzschwingkreis 47a, 47b umfasst mindestens einen Varaktor V, der zur mindestens einen Sendespule 22, 23 parallel geschaltet ist. Eine Steuerspannung Us wird über eine Entkoppelinduktivität LB an den Varaktor V angelegt. Beide sind über einen Koppelkondensator CK mit einem LC-Schwingkreis 81 verbunden. Dieser besteht aus der Kapazität C und der jeweiligen Sendespule 22, 23.

Eine jeweilige Frequenz f kann in dieser Anordnung durch den Varaktor V abgestimmt werden. Die Variation der Frequenz um 200 kHz bis 1 MHz ist durch Verwendung des Varaktors möglich.

Der beschriebene Aufbau verwendet Frequenzerzeuger oder Resonanzschwingkreise. Andere Taktgeber, wie RC-Oszillatoren oder Quarz-Oszillatoren, können ebenfalls zur Ansteuerung bzw. Vorgabe der Frequenz verwendet werden. Eine Variation der Frequenz ist auch durch Veränderung anderer Bauelementewerte als der Beeinflussung des Varaktors möglich. Im Fall von RC-Oszillatoren kann der Stromfluss oder Widerstandswert durch eine stellbare Stromquelle beeinflusst werden.

Es kann ein digitaler Frequenzerzeuger vorgesehen sein, der die Frequenz mittels digitaler Frequenzsynthese variiert.

In diesem Fall kann der Quarz-Oszillator oder der RC-Oszillator als Taktgeber verwendet werden. Die jeweilige Frequenz f wird vom digitalen Frequenzerzeuger mittels eines stellbaren Oszillators erzeugt. Das Ausgangssignal des stellbaren Oszillators wird erzeugt, indem eine vom Taktgeber vorgegebene Hauptfrequenz durch einen digitalen Teiler in der Frequenz verringert wird. Das Ausgangssignal wird mittels eines Phasenkomparators mit der Hauptfrequenz verglichen. Ein hierbei möglicherweise auftretender Phasenfehler wird zur Steuerung des stellbaren Oszillators verwendet. Durch diese Rückkopplung wird eine nahezu beliebige Frequenz mit der Präzision der Taktquelle erzeugt. Die unmittelbare Verwendung eines stellbaren Oszillators ist ebenso möglich, wenn dessen in der Regel geringe Frequenzstabilität für den Anwendungsfall ausreichend ist

In den beschriebenen Resonanzschwingkreisen 47a, 47b wird auch die Sendespule 22, 23 als frequenzbestimmendes Element verwendet. Dadurch erfolgt eine Kompensation von Störeinflüssen, die die Frequenz verändern, in erster Ordnung bereits intrinsisch.

## Patentansprüche

1. Drehwinkelsensor (10), umfassend
ein Statorelement (12),
ein bezüglich des Statorelements (12) um eine Drehachse (A) drehbar gelagertes Rotorelement (14), wobei der Drehwinkel durch eine induktive Kopplung zwischen dem Rotorelement (14) und dem Statorelement (12) erfassbar ist, und
eine Messeinrichtung (16), wobei die Messeinrichtung (16) ausgebildet ist, den Drehwinkel abhängig von der induktiven Kopplung zwischen dem Rotorelement (14) und dem Statorelement (12) zu erfassen,
wobei das Statorelement (12) mindestens eine Sendespule (22, 23) zur Aussendung elektromagnetischer Wechselfelder und mindestens zwei Empfangsspulen (28a, 28b; 29a, 29b) zum Erfassen elektromagnetischer Wechselfelder aufweist,
wobei die Messeinrichtung (16) ausgebildet ist, die mindestens eine Sendespule (22, 23) mit wenigstens zwei voneinander verschiedenen Frequenzen zur Aussendung von wenigstens zwei elektromagnetischen Wechselfeldern anzuregen,
wobei die Messeinrichtung (16) ausgebildet ist, wenigstens zwei durch Aussendung der wenigstens zwei elektromagnetischen Wechselfelder in mindestens einer der mindestens zwei Empfangsspulen (28a, 28b; 29a, 29b) induzierte Wechselspannungen zur Erfassung wenigstens zweier induktiver Kopplungen mittels jeweiliger Frequenzen der wenigstens zwei elektromagnetischen Wechselfelder zu demodulieren.

2. Drehwinkelsensor (10) nach Anspruch 1, **dadurch gekennzeichnet, dass** die Messeinrichtung (16) einen Frequenzerzeuger (17), insbesondere einen digitalen Frequenzerzeuger (17), umfasst, der ausgebildet ist, zur Aussendung von elektromagnetischen Wechselfeldern unterschiedlicher Frequenz durch die mindestens eine Sendespule (22, 23), eine Vielzahl, insbesondere sich stetig ändernden, Frequenzen vorzugeben,
wobei die Messeinrichtung (16) einen Demodulator (18) umfasst, der ausgebildet ist, die mittels der elektromagnetischen Wechselfelder unterschiedlicher Frequenz induzierten Wechselspannungen mittels der jeweils vorgegebenen Frequenz zu demodulieren.

3. Drehwinkelsensor (10) nach Anspruch 1, **dadurch gekennzeichnet, dass** das Statorelement (12) eine erste Sendespule (22), eine zweite Sendespule (23), und wenigstens zwei Empfangsspulen (28a, 28b; 29a, 29b) aufweist,
wobei die erste Sendespule (22) ein erstes elektromagnetisches Wechselfeld aussendet,
wobei die zweite Sendespule (23) ein zweites elektromagnetisches Wechselfeld aussendet, dessen Frequenz sich von dem ersten elektromagnetischen Wechselfeld unterscheidet, insbesondere um wenigstens 5%.

4. Drehwinkelsensor (10) nach Anspruch 3, **dadurch gekennzeichnet, dass** die Messeinrichtung (16) einen ersten Resonanzschwingkreis (47a) umfasst, der ausgebildet ist, das erste elektromagnetische Wechselfeld zu einem ersten Zeitpunkt mit einer ersten Frequenz zu erzeugen, und wobei die Messeinrichtung (16) einen zweiten Resonanzschwingkreis (47b) umfasst, der ausgebildet ist, das zweite elektromagnetische Wechselfeld zu einem vom ersten Zeitpunkt verschiedenen zweiten Zeitpunkt mit einer zweiten Frequenz zu erzeugen.

5. Drehwinkelsensor (10) nach Anspruch 4, **dadurch gekennzeichnet, dass** der Drehwinkelsensor (10) einen Demodulator (18) umfasst, der ausgebildet ist, die in der jeweiligen Empfangsspule (28a, 28b) erzeugte erste induzierte Wechselspannung mittels der ersten Frequenz zu demodulieren und die in der jeweiligen Empfangsspule (28a, 28b) erzeugte zweite induzierte Wechselspannung mittels der zweiten Frequenz zu demodulieren.

6. Drehwinkelsensor (10) nach Anspruch 3, **dadurch gekennzeichnet, dass** das Statorelement (12) mindestens zwei erste Empfangsspulen (28a, 28b) und mindestens zwei zweite Empfangsspulen (29a, 29b) aufweist, wobei die mindestens zwei ersten Empfangsspulen (28a, 28b) zur Erfassung einer ersten induzierten Wechselspannung mit der ersten Frequenz des ersten elektromagnetischen Wechselfeldes ausgebildet sind, wobei die mindestens zwei zweiten Empfangsspulen (29a, 29b) zur Erfassung einer zweiten induzierten Wechselspannung mit der zweiten Frequenz des zweiten elektromagnetischen Wechselfeldes ausgebildet sind.

7. Drehwinkelsensor (10) nach Anspruch 6, **dadurch gekennzeichnet, dass** die Messeinrichtung (16) einen ersten Resonanzschwingkreis (47a) umfasst, der ausgebildet ist, das erste elektromagnetische Wechselfeld zu einem ersten Zeitpunkt, mit einer ersten Frequenz zu erzeugen, und wobei die Messeinrichtung (16) einen zweiten Resonanzschwingkreis (47b) umfasst, der ausgebildet ist, das zweite elektromagnetische Wechselfeld zu einem vom ersten Zeitpunkt verschiedenen zweiten Zeitpunkt, mit einer zweiten Frequenz zu erzeugen.

8. Drehwinkelsensor (10) nach Anspruch 7, **dadurch gekennzeichnet, dass** die Messeinrichtung (16) einen Demodulator (18) umfasst, der ausgebildet ist, die erste induzierte Wechselspannung mittels der ersten Frequenz zu demodulieren, und die zweite induzierte Wechselspannung mittels der zweiten Frequenz zu demodulieren.

9. Drehwinkelsensor (10) nach Anspruch 8, **dadurch gekennzeichnet, dass** der Demodulator (18) ausgebildet ist, die erste induzierte Wechselspannung als Eingangssignal von mindestens einer der mindestens zwei ersten Empfangsspulen (28a, 28b) mit der ersten Frequenz und die zweite induzierte Wechselspannung als Eingangssignal von mindestens einer der mindestens zwei zweiten Empfangsspulen (29a, 29b) mit der zweiten Frequenz zu demodulieren.

10. Drehwinkelsensor (10) nach einem der Ansprüche 3 bis 9, **dadurch gekennzeichnet, dass** der Drehwinkelsensor (10) mindestens einen Resonanzschwingkreis (47a, 47b) zur Erzeugung einer jeweiligen Frequenz umfasst,
wobei der mindestens eine Resonanzschwingkreis (47a, 47b) die mindestens eine Sendespule (22, 23) insbesondere als Teil mindestens eines LC-Schwingkreises (81) umfasst.

11. Drehwinkelsensor (10) nach einem der Ansprüche 3 bis 10, **dadurch gekennzeichnet, dass** der Resonanzschwingkreis (47a, 47b) mindestens einen Varaktor (V) umfasst, der zur mindestens einen Sendespule (22, 23) parallel geschaltet ist, wobei eine jeweilige Frequenz durch den Varaktor (V) abstimmbar ist.

12. Drehwinkelsensor (10) nach einem der vorherigen Ansprüche, **dadurch gekennzeichnet, dass** eine Vielzahl an Frequenzen insbesondere im Bereich von 4 MHz bis 6 MHz vorgebbar sind.

## Claims

1. Rotation angle sensor (10) comprising a stator element (12),
a rotor element (14) mounted rotatably about an axis of rotation (A) with respect to the stator element (12), wherein the rotation angle can be detected through inductive coupling between the rotor element (14) and the stator element (12), and
a measurement device (16), wherein the measurement device (16) is designed to detect the rotation angle depending on the inductive coupling between the rotor element (14) and the stator element (12),
wherein the stator element (12) has at least one transmission coil (22, 23) for emitting electromagnetic alternating fields and at least two reception coils (28a, 28b; 29a, 29b) for detecting electromagnetic alternating fields,
wherein the measurement device (16) is designed to excite the at least one transmission coil (22, 23) at at least two mutually different frequencies in order to emit at least two electromagnetic alternating fields,
wherein the measurement device (16) is designed to demodulate at least two AC voltages induced in at least one of the at least two reception coils (28a, 28b; 29a, 29b) by emitting the at least two electromagnetic alternating fields in order to detect at least two inductive couplings by way of respective frequencies of the at least two electromagnetic alternating fields.

2. Rotation angle sensor (10) according to Claim 1, **characterized in that** the measurement device (16) comprises a frequency generator (17), in particular a digital frequency generator (17), that is designed to predefine a multiplicity of in particular constantly changing frequencies for the emission of electromagnetic alternating fields of different frequency by the at least one transmission coil (22, 23),
wherein the measurement device (16) comprises a demodulator (18) that is designed to demodulate the AC voltages, induced by way of the electromagnetic alternating fields of different frequency, by way of the respectively predefined frequency.

3. Rotation angle sensor (10) according to Claim 1, **characterized in that** the stator element (12) has a first transmission coil (22), a second transmission coil (23), and at least two reception coils (28a, 28b; 29a, 29b), wherein the first transmission coil (22) emits a first electromagnetic alternating field,
wherein the second transmission coil (23) emits a second electromagnetic alternating field whose frequency differs from the first electromagnetic alternating field, in particular by at least 5%.

4. Rotation angle sensor (10) according to Claim 3, **characterized in that** the measurement device (16) comprises a first resonant oscillating circuit (47a) that is designed to generate the first electromagnetic alternating field at a first frequency at a first time, and wherein the measurement device (16) comprises a second resonant oscillating circuit (47b) that is designed to generate the second electromagnetic alternating field at a second frequency at a second time different from the first time.

5. Rotation angle sensor (10) according to Claim 4, **characterized in that** the rotation angle sensor (10) comprises a demodulator (18) that is designed to demodulate the first induced AC voltage generated in the respective reception coil (28a, 28b) by way of the first frequency and to demodulate the second induced AC voltage generated in the respective reception coil (28a, 28b) by way of the second frequency.

6. Rotation angle sensor (10) according to Claim 3, **characterized in that** the stator element (12) has at least two first reception coils (28a, 28b) and at least two second reception coils (29a, 29b),
wherein the at least two first reception coils (28a, 28b) are designed to detect a first induced AC voltage at the first frequency of the first electromagnetic alternating field,
wherein the at least two second reception coils (29a, 29b) are designed to detect a second induced AC voltage at the second frequency of the second electromagnetic alternating field.

7. Rotation angle sensor (10) according to Claim 6, **characterized in that** the measurement device (16) comprises a first resonant oscillating circuit (47a) that is designed to generate the first electromagnetic alternating field at a first frequency at a first time, and wherein the measurement device (16) comprises a second resonant oscillating circuit (47b) that is designed to generate the second electromagnetic alternating field at a second frequency at a second time different from the first time.

8. Rotation angle sensor (10) according to Claim 7, **characterized in that** the measurement device (16) comprises a demodulator (18) that is designed to demodulate the first induced AC voltage by way of the first frequency and to demodulate the second induced AC voltage by way of the second frequency.

9. Rotation angle sensor (10) according to Claim 8, **characterized in that** the demodulator (18) is designed to demodulate the first induced AC voltage as input signal of at least one of the at least two first reception coils (28a, 28b) at the first frequency and to demodulate the second induced AC voltage as input signal of at least one of the at least two second reception coils (29a, 29b) at the second frequency.

10. Rotation angle sensor (10) according to one of Claims 3 to 9, **characterized in that** the rotation angle sensor (10) comprises at least one resonant oscillating circuit (47a, 47b) for generating a respective frequency, wherein the at least one resonant oscillating circuit (47a, 47b) comprises the at least one transmission coil (22, 23), in particular as part of at least one LC resonant circuit (81).

11. Rotation angle sensor (10) according to one of Claims 3 to 10, **characterized in that** the resonant oscillating circuit (47a, 47b) comprises at least one varactor (V) that is connected in parallel with the at least one transmission coil (22, 23), wherein a respective frequency can be tuned by the varactor (V).

12. Rotation angle sensor (10) according to one of the preceding claims, **characterized in that** a multiplicity of frequencies can be predefined in particular in the range of 4 MHz to 6 MHz.

## Revendications

1. Capteur d'angle de rotation (10), comprenant
un élément de stator (12),
un élément de rotor (14) monté rotatif autour d'un axe de rotation (A) par rapport à l'élément de stator (12), l'angle de rotation pouvant être détecté par un couplage inductif entre l'élément de rotor (14) et l'élément de stator (12), et
un dispositif de mesure (16), le dispositif de mesure (16) étant réalisé pour détecter l'angle de rotation en fonction du couplage inductif entre l'élément de rotor (14) et l'élément de stator (12),
l'élément de stator (12) présentant au moins une bobine d'émission (22, 23) pour émettre des champs électromagnétiques alternatifs et au moins deux bobines de réception (28a, 28b ; 29a, 29b) pour détecter des champs électromagnétiques alternatifs,
le dispositif de mesure (16) étant réalisé pour exciter ladite au moins une bobine d'émission (22, 23) à au moins deux fréquences différentes l'une de l'autre pour émettre au moins deux champs électromagnétiques alternatifs,
le dispositif de mesure (16) étant réalisé pour démoduler au moins deux tensions alternatives induites par l'émission des au moins deux champs électromagnétiques alternatifs dans au moins l'une des au moins deux bobines de réception (28a, 28b ; 29a, 29b) pour détecter au moins deux couplages inductifs au moyen de fréquences respectives des au moins deux champs électromagnétiques alternatifs.

2. Capteur d'angle de rotation (10) selon la revendication 1, **caractérisé en ce que** le dispositif de mesure (16) comprend un générateur de fréquence (17), en particulier un générateur de fréquence numérique (17) qui est réalisé, afin de spécifier une pluralité de fréquences, en particulier de fréquences variables en continu, pour émettre des champs électromagnétiques alternatifs de fréquence différente par ladite au moins une bobine d'émission (22, 23), le dispositif de mesure (16) comprenant un démodulateur (18) qui est réalisé pour démoduler les tensions alternatives, induites au moyen des champs électromagnétiques alternatifs de fréquence différente, au moyen de la fréquence respectivement spécifiée.

3. Capteur d'angle de rotation (10) selon la revendication 1, **caractérisé en ce que** l'élément de stator (12) présente une première bobine d'émission (22), une deuxième bobine d'émission (23), et au moins deux bobines de réception (28a, 28b ; 29a, 29b),
la première bobine d'émission (22) émettant un premier champ électromagnétique alternatif,
la deuxième bobine d'émission (23) émettant un deuxième champ électromagnétique alternatif dont la fréquence est différente du premier champ électromagnétique alternatif, en particulier d'au moins 5 %.

4. Capteur d'angle de rotation (10) selon la revendication 3, **caractérisé en ce que** le dispositif de mesure (16) comprend un premier circuit résonnant (47a) qui est réalisé pour générer le premier champ électromagnétique alternatif à un premier instant à une première fréquence, et le dispositif de mesure (16) comprenant un deuxième circuit résonnant (47b) qui est réalisé pour générer le deuxième champ électromagnétique alternatif à un deuxième instant différent du premier instant à une deuxième fréquence.

5. Capteur d'angle de rotation (10) selon la revendication 4, **caractérisé en ce que** le capteur d'angle de rotation (10) comprend un démodulateur (18) qui est réalisé pour démoduler la première tension alternative induite générée dans la bobine de réception respective (28a, 28b) au moyen de la première fréquence, et pour démoduler la deuxième tension alternative induite générée dans la bobine de réception respective (28a, 28b) au moyen de la deuxième fréquence.

6. Capteur d'angle de rotation (10) selon la revendication 3, **caractérisé en ce que** l'élément de stator (12) présente au moins deux premières bobines de réception (28a, 28b) et au moins deux deuxièmes bobines de réception (29a, 29b), les au moins deux premières bobines de réception (28a, 28b) étant réalisées pour détecter une première tension alternative induite à la première fréquence du premier champ électromagnétique alternatif, les au moins deux deuxièmes bobines de réception (29a, 29b) étant réalisées pour détecter une deuxième tension alternative induite à la deuxième fréquence du deuxième champ électromagnétique alternatif.

7. Capteur d'angle de rotation (10) selon la revendication 6, **caractérisé en ce que** le dispositif de mesure (16) comprend un premier circuit résonnant (47a) qui est réalisé pour générer le premier champ électromagnétique alternatif à un premier instant, à une première fréquence, et le dispositif de mesure (16) comprenant un deuxième circuit résonnant (47b) qui est réalisé pour générer le deuxième champ électromagnétique alternatif à un deuxième instant différent du premier instant, à une deuxième fréquence.

8. Capteur d'angle de rotation (10) selon la revendication 7, **caractérisé en ce que** le dispositif de mesure (16) comprend un démodulateur (18) qui est réalisé pour démoduler la première tension alternative induite au moyen de la première fréquence, et pour démoduler la deuxième tension alternative induite au moyen de la deuxième fréquence.

9. Capteur d'angle de rotation (10) selon la revendication 8, **caractérisé en ce que** le démodulateur (18) est réalisé pour démoduler la première tension alternative induite comme signal d'entrée d'au moins l'une des au moins deux premières bobines de réception (28a, 28b) à la première fréquence, et pour démoduler la deuxième tension alternative induite comme signal d'entrée d'au moins l'une des au moins deux deuxièmes bobines de réception (29a, 29b) à la deuxième fréquence.

10. Capteur d'angle de rotation (10) selon l'une quelconque des revendications 3 à 9, **caractérisé en ce que** le capteur d'angle de rotation (10) comprend au moins un circuit résonnant (47a, 47b) pour générer une fréquence respective,
ledit au moins un circuit résonnant (47a, 47b) comprenant ladite au moins une bobine d'émission (22, 23), en particulier comme partie d'au moins un circuit résonnant LC (81).

11. Capteur d'angle de rotation (10) selon l'une quelconque des revendications 3 à 10, **caractérisé en ce que** le circuit résonnant (47a, 47b) comprend au moins un varactor (V) qui est connecté en parallèle à ladite au moins une bobine d'émission (22, 23), une fréquence respective étant accordable par le varactor (V).

12. Capteur d'angle de rotation (10) selon l'une quelconque des revendications précédentes, **caractérisé en ce qu'**une pluralité de fréquences peut être spécifiée, en particulier dans la plage de 4 MHz à 6 MHz.
